# FASCICULE DE BREVET EUROPEEN

(11) **EP 2 556 555 B1**
(45) Date de publication et mention de la délivrance du brevet: **19.03.2014**
(21) Numéro de dépôt: 11718460.6
(22) Date de dépôt: 07.04.2011
(51) Int. Cl.: H01M 8/24, H01M 8/02, C25D 5/10

(54) **BANDELETTES DE LIAISON D'ANODES ET DE CATHODES D'UN CONVERTISSEUR ELECTROCHIMIQUE ET CONVERTISSEUR LE COMPRENANT**
STREIFEN ZUR VERBINDUNG DER ANODEN UND KATHODEN EINES ELEKTROCHEMISCHEN WANDLERS UND WANDLER DAMIT
STRIPS FOR CONNECTING THE ANODES AND CATHODES OF AN ELECTROCHEMICAL CONVERTER AND A CONVERTER COMPRISING IT

(30) Priorité: 08.04.2010 FR 1052661
(43) Date de publication de la demande: 13.02.2013
(73) Titulaire: Pragma Industries, 64210 Bidart (FR)
(72) Inventeur: FORTE, Pierre, F-64200 Biarritz (FR); LEPILLER, Catherine, 86000 Poitiers (FR)
(74) Mandataire: Maupilier, Didier
(86) Numéro de dépôt international: PCT/FR2011/050780
(87) Numéro de publication internationale: WO 2011/124850

(56) Documents cités:
- WO-A1-99/60642
- WO-A1-2005/124902
- FR-A1- 2 880 994
- JP-A- 2003 086 196
- JP-A- 2008 204 945
- US-A- 5 925 477
- US-A1- 2003 098 237
- US-A1- 2004 013 812
- US-A1- 2005 123 817
- US-B1- 6 277 513

## Description

La présente invention concerne un perfectionnement de convertisseur électrochimique de type pile à combustible.

Le document EP1 846 976 A1 décrit un convertisseur électrochimique à membrane protonique comportant une pluralité de cellules électrochimiques reliées en série qui comporte un premier substrat, sous forme d'une bande continue et des seconds substrats sous forme de segments de bande, le premier substrat comportant une première face, sur laquelle est réalisée une succession de premiers dépôts formant une série d'anodes espacées, et une seconde face, sur laquelle est réalisée une succession de seconds dépôts formant une série de cathodes espacées disposées en regard desdites anodes, lesdites anodes et cathodes formant une succession de cellules électrochimiques unitaires, le premier substrat étant pourvu d'une succession de traversées de passage des seconds substrats, les seconds substrats étant dimensionnés pour réaliser une piste de connexion entre une cathode d'une cellule unitaire et une anode d'une cellule unitaire adjacente.

Dans ce convertisseur les électrodes sont disposées sur un premier substrat constitué par une membrane protonique et la mise en série des électrodes est réalisée au moyen de traversées et de seconds substrats traversant le premier substrat pour réaliser des pistes de connexion entre une anode et une cathode de cellules adjacentes.

Les seconds substrats constituent des couches de diffusion gazeuse en particulier réalisées dans un second substrat de type tissu polymère poreux métallisé pour le rendre conducteur et réaliser ainsi les pistes de connexion entre les cellules unitaires.

Ceci permet de réaliser un convertisseur électrochimique fournissant une tension importante sous un faible volume. Le document FR2880994 décrit une bandelette de liaison d'anodes et de cathodes d'un convertisseur électrochimique réalisée à partir d'un substrat poreux métallisé.

La présente invention concerne un perfectionnement d'un tel convertisseur pour lequel les seconds substrats sont réalisés sous forme de bandelettes poreuses à base polymère métallisées et revêtues d'une couche hydrophobe.

L'invention concerne plus précisément une bandelette de liaison d'anodes et de cathodes d'un convertisseur électrochimique caractérisé en ce qu'elle est réalisée à partir d'un substrat poreux métallisé comportant un revêtement hydrophobe au moins dans des zones de contact avec lesdites anodes et/ou cathodes.

Selon un premier mode de réalisation, le substrat poreux est à base de matériau tissé.

Selon un second mode de réalisation, le substrat poreux est à base de matériau non tissé.

Selon l'invention, le substrat poreux comprend notamment une base polymère.

La base polymère est alors avantageusement choisie parmi une base polyamide, polyester, aramide ou une combinaison d'au moins deux de ces matériaux.

Selon une première alternative, le substrat poreux est formé d'un copolymère à base de polyester.

Selon une seconde alternative, le substrat poreux comprend une base verre.

L'épaisseur du substrat est avantageusement entre 100 et 600 µm. Préférentiellement, l'épaisseur du substrat est entre 150 et 300 µm.

La densité du substrat est avantageusement comprise entre 50 et 200 g/m² et préférentiellement comprise entre 60 et 120 g/m².

Selon l'invention, la métallisation du substrat est faite avec un métal choisi parmi Cu, Au, Sn, Ni, NiP ou leurs alliages.

Avantageusement, l'épaisseur du dépôt de métallisation est comprise entre 0,5 et 20 µm et préférablement entre 1 et 10 µm.

La densité surfacique de métallisation est avantageusement comprise entre 25 et 300 g/m² et préférablement entre 50 et 200 g/m².

Le revêtement hydrophobe de la bandelette comprend avantageusement un polymère thermoplastique élastomère.

Ledit polymère comporte préférablement des fonctions vinyliques.

Le polymère est avantageusement choisi parmi les poly(Styrène-Ethylène-Butadiène-Styrène) (SEBS), poly(Styrène-Butadiène-Styrène) (SBS), poly(Styrène-Ethylène-Propylène-Styrène) (SEPS), homopolymère poly(butadiène) hydroxylé (PBu), poly(Butadiène-Octène) (PBO), poly(Ethylène-Octène) (PEO), poly(Butadiène- Propylène) (PBP), poly(DiFluorure de Vinylidène) (PVDF), le copolymère poly(DiFluorure de Vinylidène (PVDF)-HexaFluoroPropylène (HFP)) ou le poly(difluorure de vinylidène-co-trifluoroéthylène) (PVDF-TrFE).

Ledit polymère est préférablement le poly(Styrène-Ethylène-Butadiène-Styrène) (SEBS) greffé par l'anhydride maléique.

Le revêtement hydrophobe comprend avantageusement un matériau conducteur poreux.

Le matériau conducteur poreux est préférablement choisi parmi les nanopoudres de noir de carbone, les nanofibres de carbone ou les nanotubes de carbone.

Le revêtement hydrophobe comprend avantageusement un polymère, et le rapport polymère/carbone est compris entre 10/90 et 50/50.

Le rapport polymère/carbone est préférablement compris entre 20/80 et 30/70.

La bandelette de l'invention possède alors une charge en polymère/carbone comprise entre 0,5 et 50% massique.

Ladite charge est préférablement comprise entre 10 et 50%.

L'invention concerne en outre un convertisseur électrochimique comportant une bande porteuse de cellules unitaires caractérisé en ce qu'il comprend des seconds substrats sous forme de bandelettes selon l'une quelconque des revendications précédentes réalisant des pistes de connexion traversant la bande porteuse pour relier des anodes des cellules à des cathodes de cellules adjacentes.

Les bandelettes traversent avantageusement la bande porteuse par des fentes de passage, une colle ou un film adhésif thermoplastique refermant les fentes de manière imperméable aux gaz.

La colle comprend avantageusement une résine polymérisant en température et/ou aux ultraviolets.

La résine est préférablement une résine sans solvant choisie dans la famille des silicones, acrylates, uréthane acrylates, époxys modifiées.

La viscosité de la colle est avantageusement choisie en fonction de l'épaisseur de la bandelette et de la densité de fibres du matériau poreux.

Notamment, la viscosité de la colle est avantageusement comprise entre 0,3 et 50 Pa s.

La colle ou l'adhésif choisi est notamment adapté(e) à imprégner la piste de connexion dans son épaisseur sans diminuer la conduction électronique.

Selon une variante de l'invention, un film adhésif thermoplastique referme les fentes de manière imperméable aux gaz. Le film est choisi dans la famille des polyoléfines modifiées, des polyesters, des polyamides, et des polyétheramides.

La largeur du film adhésif est avantageusement comprise entre 2 et 10 mm, de préférence entre 2 et 5 mm, son épaisseur étant comprise entre 50 et 300 µm.

L'invention concerne enfin un procédé de réalisation de bandelettes de liaison d'anodes et de cathodes d'un convertisseur électrochimique caractérisé en ce que
on choisit un substrat poreux selon l'invention,
on procède à une étape de métallisation du substrat avec un métal parmi Cu, Au, Sn, Ni, NiP et/ou leurs alliages, étape qui comprend une ou plusieurs préparations de surface du substrat des bandelettes suivies d'étapes en solution dont au moins un dépôt chimique sur les fibres isolantes avec Cu ou NiP et un ou plusieurs dépôts galvanostatiques.

L'étape de métallisation est avantageusement dérivée de la voie auto-catalytique complétée par une agitation mécanique en continu.

Préférablement, l'étape de métallisation se poursuit jusqu'à obtenir une épaisseur totale du dépôt autour des fibres métallisées comprise entre 0,5 et 20 µm, de préférence entre 1 et 10 µm.

Selon l'invention on soumet la bandelette métallisée à un traitement hydrophobe à basse température par enduction ou pulvérisation mettant en oeuvre des polymères utilisables en solution ou en émulsion, de nature hydrophobe et dont la perméabilité est compatible avec le passage des gaz réactants à travers la couche formée.

Ledit polymère fait avantageusement partie de la classe des thermoplastiques élastomères.

Ledit polymère possède préférablement des fonctions vinyliques.

Avantageusement, pour soumettre la bandelette au traitement hydrophobe, on réalise une opération dite de frittage du polymère.

Avantageusement pour soumettre la bandelette au traitement hydrophobe, on dissout le polymère au moins partiellement dans un solvant ou un mélange de solvants en sorte d'obtenir une solution ou une suspension colloïdale.

Selon un mode de réalisation particulier, pour soumettre la bandelette au traitement hydrophobe, on utilise une formulation de type latex en suspension aqueuse.

Préférablement, on effectue la mise en solution par agitation magnétique ou mécanique à une température comprise entre la température ambiante et 80 °C.

Avantageusement, on réalise le traitement hydrophobe par enduction libre.

Après enduction, on retire le ou les solvant(s) et on réalise une opération de frittage dans une étuve à une température supérieure à la température de transition vitreuse du polymère hydrophobe, et légèrement inférieure à son point de fusion.

La durée du frittage est notamment comprise entre 30 minutes et 2 heures.

Le traitement hydrophobe par enduction inclut avantageusement un matériau conducteur poreux dont la distribution des tailles de pores est centrée sur une valeur inférieure à 1 µm.

Le matériau conducteur poreux est choisi préférentiellement parmi des nanopoudres de type noir de carbone, des nanofibres de carbone ou des nanotubes de carbone.

On ajoute avantageusement le matériau conducteur poreux à la dispersion de polymère hydrophobe dans un rapport polymère/carbone compris entre 10/90 et 50/50, de préférence entre 20/80 et 30/70.

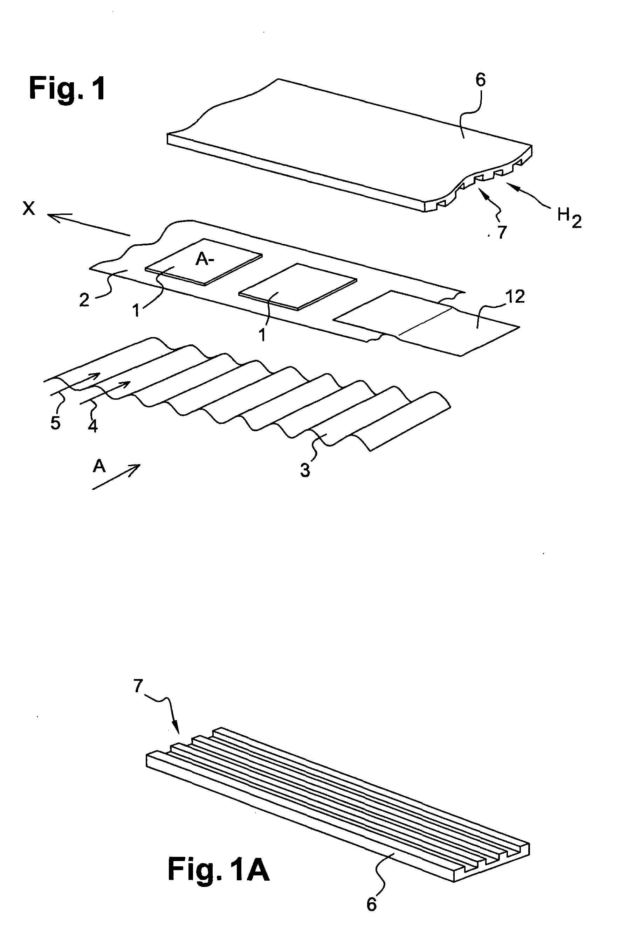

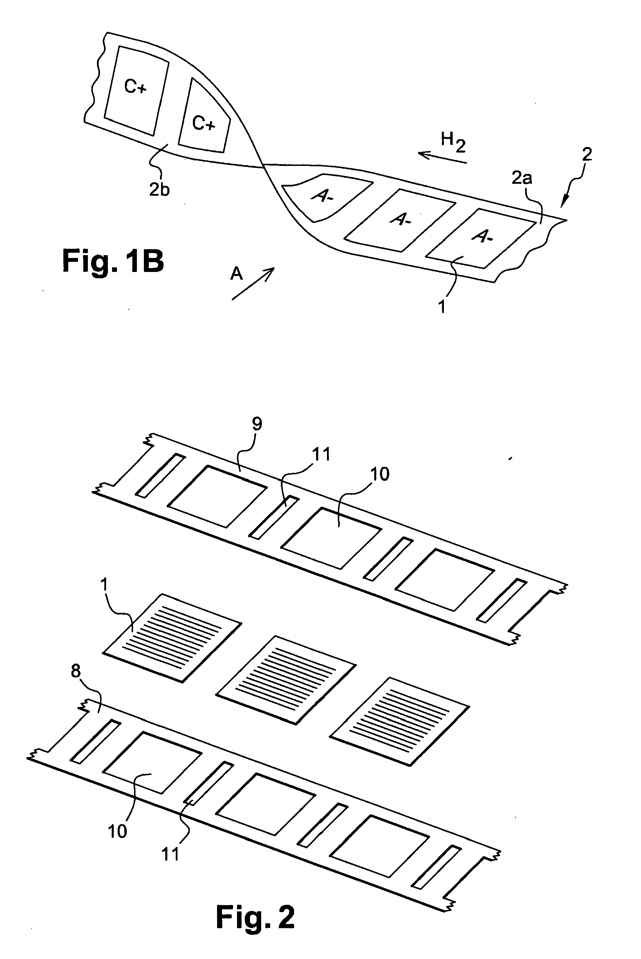

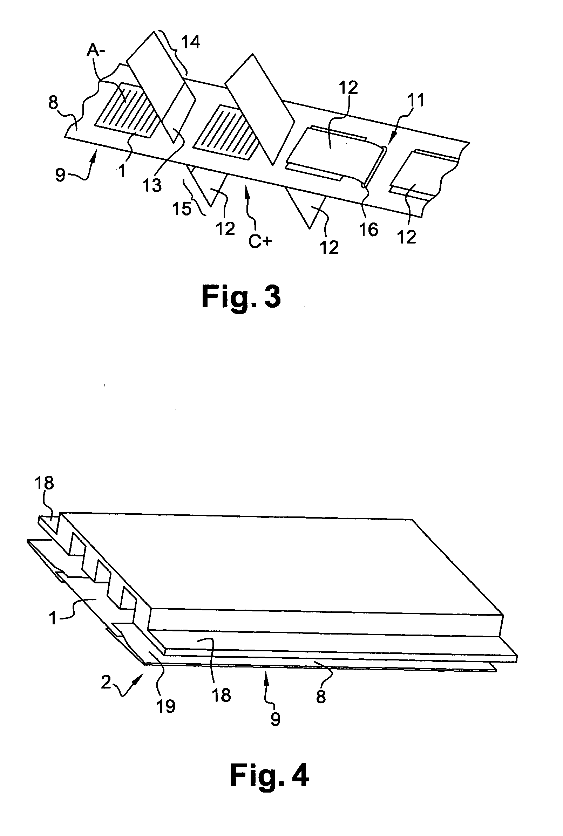

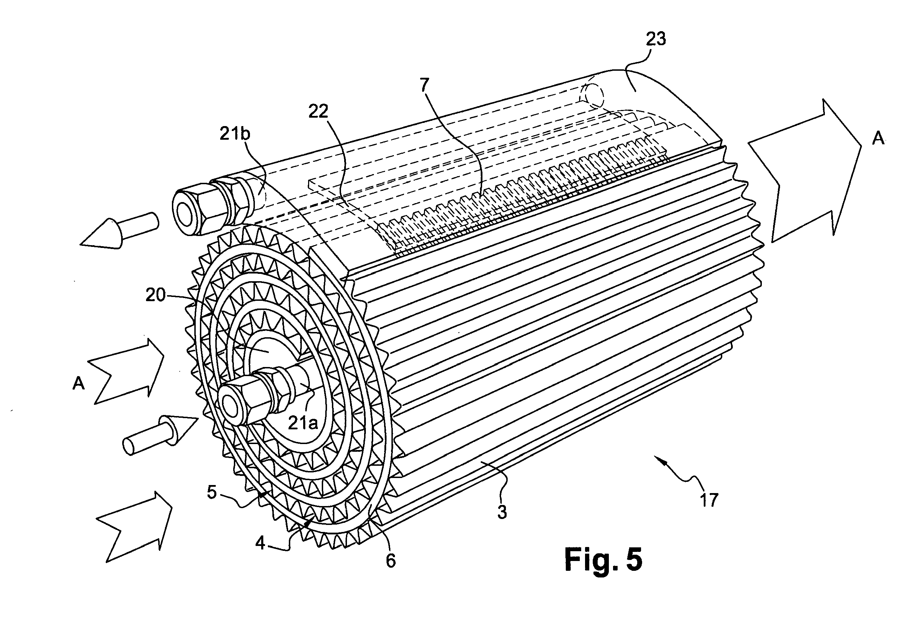

D'autres caractéristiques et avantages de l'invention seront apparents à la lecture de la description qui suit d'un exemple non limitatif de réalisation de l'invention accompagné des dessins qui représentent:
- en figure 1:: une vue en perspective d'un détail d'un exemple de réalisation d'un convertisseur selon l'invention;
- en figure 1A:: une vue en perspective de dessous d'une couverture adaptée à l'alimentation en hydrogène du convertisseur de la figure 1;
- en figure 1B:: une vue en perspective de la bande de la figure 1 vrillée;
- en figure 2:: une vue en éclaté d'une bande de maintien de cellules de l'invention selon une première étape de montage;
- en figure 3:: une vue en perspective de la bande de maintien de la figure 2 selon une seconde étape de montage;
- en figure 4:: une vue en perspective d'une étape d'assemblage de la bande de la figure 3 avec une couverture selon la figure 2;
- en figure 5:: une vue en perspective d'un convertisseur cylindrique selon l'invention;

La figure 1 représente un élément de convertisseur électrochimique à membrane protonique réalisé selon l'invention qui comporte une pluralité de cellules électrochimiques unitaires 1 reliées en série et disposées sur une bande porteuse 2 allongée selon un axe longitudinal.

Comme représenté en figure 1B où l'on a vrillé la bande 2 pour en représenter le dessus et le dessous, une première face 2a de la bande présente des anodes A- et reçoit de l'hydrogène H₂ et une seconde face 2b de la bande présente des cathodes C+ et reçoit de l'air A.

L'hydrogène circule selon un flux parallèle à l'axe longitudinal X de la bande 2 et l'air circule selon un flux transversal à l'axe longitudinal de la bande.

Selon l'invention, des moyens de séparation repérés 3 sur la figure 1 divisent le flux d'air deux parties à savoir en un flux de refroidissement 4 sans contact avec les cathodes et un flux de réaction cathodique 5 en contact avec les cathodes C+.

Ces moyens de séparation 3 sont constitués selon l'exemple par un film ondulé dont les ondulations sont disposées perpendiculairement à l'axe longitudinal X de la bande.

Il est à noter que le flux de réaction cathodique participe au refroidissement.

Ainsi les flux partiels 4 et 5 participent au refroidissement, par contre le flux 5 participe à la réaction cathodique.

Ceci permet d'améliorer le refroidissement de la pile sans trop augmenter le flux d'air cathodique, ce qui poserait des problèmes d'assèchement de l'électrolyte par effet de sur-ventilation.

Le moyen de séparation de l'invention permet de faire varier le ratio (débit air de réaction)/(débit air de refroidissement) en faisant varier la géométrie de la bande ondulée, par exemple en réalisant des ondulations asymétriques aménageant une section passante plus importante d'un côté que de l'autre.

L'intérêt d'utiliser un film ondulé est sa simplicité de mise en oeuvre du fait que les ondulations forment naturellement des moyens de séparation de couches lorsque l'on empile des couches de cellules ou lorsque l'on enroule la bande portant les cellules comme dans la présente réalisation.

Le film ondulé peut notamment être réalisé dans un matériau plastique PET d'épaisseur de l'ordre de 1/4 de mm ou entre 1/5 à 1/3 de mm.

Les ondulations ou cannelures sont formées à chaud par le passage du film dans un outil de formage.

Les ondulations sont adaptées à résister à un écrasement lors de la réalisation de couches ou d'enroulements pour réaliser un convertisseur complet.

Côté anodes, la bande porteuse est recouverte d'une couverture élastomère 6 pourvue de canaux longitudinaux 7 de passage de l'hydrogène.

La couverture élastomère est d'une épaisseur de l'ordre de 1 mm, par exemple entre 0,8 et 1,2 mm.

Les canaux longitudinaux sont sous forme de rainures de 0,5 à 2 mm de large et de profondeur de l'ordre de 0,5 à 1 mm.

Cette couverture élastomère, de largeur équivalente à la largeur de la bande portant les cellules unitaires, est réalisée dans un matériau tel qu'une silicone, un EPDM, un polyisobutylène, un polyéthylène acrylique ou chlorosulfoné et est fixée par collage ou par laminage à chaud sur les bords de la bande de manière étanche pour former un moyen de canalisation dans lequel circule l'hydrogène.

La figure 4 donne un exemple de réalisation pour lequel la couverture est pourvue d'ailes latérales 18 destinées à être collées sur les bords 19 de la bande comportant les cellules 1 et formée par collage des feuillards 8 et 9.

La bande est selon l'exemple de la figure 2 réalisée à partir de deux feuillards 8, 9 poinçonnés ou découpés pour former une succession de fenêtres 10 de retenue des cellules unitaires 1 et pourvus de fentes 11 de passage de bandelettes 12 formant couches de diffusion gazeuse et liaisons électriques entre des anodes et des cathodes successives.

L'épaisseur de la bande finie se situe dans une fourchette de 50 à 150 µm, les feuillards étant réalisés dans un matériau thermoplastique isolant et notamment un polymère thermoplastique imperméable aux gaz.

Les feuillards sont assemblés l'un sur l'autre pour enserrer les cellules unitaires 1 de manière similaire aux cadres connus par exemple du document US2004/0112532 A1.

Pour relier en série les cellules unitaires il est nécessaire de traverser la bande, les anodes et les cathodes étant sur des faces opposées de cette dernière.

On utilise des moyens de connexion réalisés à partir d'un substrat réalisé sous forme d'une bandelette poreuse métallisée et revêtue d'une couche hydrophobe au moins dans des zones de contact avec lesdites anodes et/ou cathodes.

Les bandelettes peuvent être à base de matériau tissé ou à base de matériau non tissé adapté à laisser passer les gaz réactifs vers les électrodes des cellules.

Elles peuvent notamment être réalisées à partir de tissus techniques issus du domaine de la filtration, de l'hygiène et de la protection, de l'aéronautique ou de l'industrie automobile.

Dans le cas où les bandelettes sont réalisées avec des non tissés, ces derniers peuvent être des feutres aiguilletés, des non tissés consolidés hydrauliquement (spunlace selon la technologie Anglo-saxonne) ou selon le procédé connu sous la dénomination Anglo-saxonne spunbond.

Les micro-filaments constituant les non tissés sont obtenus par voie humide ou par voie sèche. Une étape supplémentaire de calandrage peut être prévue ou non. La voie humide et le calandrage sont préférés.

Les tissés ou non-tissés choisis ont une structure anisotropique, c'est-à-dire essentiellement une structure bidimensionnelle dans laquelle les fibres sont alignées de manière plus ou moins ordonnée dans le plan du textile. Ainsi, après métallisation les connexions électriques entre les fibres s'établiront préférentiellement dans ce plan. Cette propriété est recherchée pour l'application visée car la voie de conduction préférentielle s'effectuera d'une cellule à l'autre dans le plan de la piste de connexion métallisée.

Les fibres des bandelettes sont choisies parmi les fibres de polyester, polyamide, aramide ou verre, elles peuvent aussi être formées d'un copolymère à base de polyester ou d'un mélange de ces fibres.

Le composant de base est de préférence le polyester. Ces différentes fibres possèdent une bonne résistance mécanique, tout en étant flexibles, ce qui est un critère essentiel pour l'application recherchée dans un dispositif enroulé.

Elles résistent en température jusqu'à 120 °C en continu, de préférence 160 °C, et idéalement 180 °C.

Concernant la géométrie des substrats, les critères de sélection sont l'épaisseur, entre 100 et 600 µm, de préférence entre 150 et 300 µm ; la porosité totale (taux de vide) qui doit être supérieure à 60%, de préférence entre 65 et 85% ; et la perméabilité à l'air qui doit être comprise entre 50 et 5000 L/m²s sous une pression de 200 Pa, de préférence entre 80 et 3800 L/m²s.

La densité surfacique du polymère synthétique est comprise entre 50 et 200 g/m², de préférence entre 60 et 120 g/m². En particulier, une haute densité volumique de fibres est recherchée, qui pourra fournir une piste de connexion possédant une conductivité électrique élevée après métallisation des fibres.

Le diamètre des fibres synthétiques peut varier de 5 à 50 µm, de préférence de 7 à 30 µm. Leur longueur peut varier jusqu'à l'infini (principe du mono filament ou filament continu).

La figure 3 illustre la pose des bandelettes 12 qui sont insérées dans les fentes 11 puis appliquées sur les électrodes sur et sous la bande.

Les bandelettes 12 passent d'un côté à l'autre de la bande au niveau des fentes de passage 11.

Pour terminer l'assemblage des bandelettes, une colle ou un film adhésif thermoplastique 16 referme les fentes de manière imperméable aux gaz.

On utilise pour ce faire par exemple une résine polymérisant en température et/ou aux ultraviolets ou on utilise un film adhésif thermoplastique.

L'ensemble doit rester flexible après collage pour permettre l'enroulement de la bande en spirale.

Les résines employées de type sans solvant peuvent être des silicones, des acrylates, des uréthanes ou des résines époxy modifiées.

On préfèrera les résines époxy ou silicone en raison de leur plus grande résistance aux conditions d'acidité et d'humidité de cette application.

Pour remplir le tissu des bandelettes, permettre une rapidité de collage et obtenir une bonne adhérence, la viscosité des résines peut être comprise entre 0,3 et 50 Pa.s, la viscosité optimale dépendant de l'épaisseur et de la densité des fibres de la bandelette.

Dans le cas où on utilise un film thermoplastique, ce dernier peut être choisi parmi la famille des polyoléfines modifiées, des polyesters, des polyamides, des polyétheramides.

Il peut être appliqué sous pression et/ou à chaud.

Les bandelettes 12 réalisant ces traversées ont une double fonction, laisser passer les gaz vers les électrodes et conduire le courant d'une électrode à une autre.

Comme vu plus haut, les bandelettes sont réalisées à partir d'un matériau polymère, tissé ou non.

Les propriétés intrinsèques de ce matériau sont choisies en fonction de son double rôle de piste de connexion et de couche de diffusion gazeuse dans une pile à combustible, à savoir une densité de fibres garantissant un bon compromis entre une perméabilité aux gaz et une conductivité électrique élevées après une étape de métallisation du matériau.

Pour la conductivité électrique, les bandelettes 12 sont métallisées pour assurer la liaison entre leurs zones 14, 15 de contact avec les anodes et les cathodes.

Les métaux pouvant être utilisés sont plus particulièrement : Cu, Au, Sn, Ni, NiP et/ou leurs alliages.

Ces métaux sont déposés chimiquement et/ou électrochimiquement.

Une étape ultime de dépôt peut être effectuée par une technique physico-chimique en phase vapeur ou sous vide.

Le procédé de métallisation comprend: une ou plusieurs préparations de surface du substrat des bandelettes suivies d'étapes en solution dont au moins un dépôt chimique sur les fibres isolantes avec Cu ou NiP et un ou plusieurs dépôts galvanostatiques. Le procédé de dépôt est dérivé de la voie auto-catalytique standard qui permet des dépôts uniformes et homogènes sur de grandes surfaces et des géométries variées. S'y ajoute une agitation mécanique spécifique en continu lors de la synthèse, qui a pour objectif de métalliser les fibres individuellement.

Un exemple de procédé utilisable est décrit dans le brevet US 2004/0013812 A1.

Un tel procédé de métallisation dynamique élimine la formation de noeuds métalliques aux intersections des fibres comme c'est le cas dans un bain électrolytique statique classique. Il permet également une métallisation dans toute l'épaisseur du textile.

L'épaisseur totale du dépôt de métallisation est comprise entre 0,5 et 20 µm, de préférence entre 1 et 10 µm.

La densité surfacique est comprise entre 25 et 300 g/m², de préférence entre 50 et 200 g/m².

Associée à la grande densité volumique de fibres des substrats sélectionnés, le recouvrement individuel et tridimensionnel des fibres permet de multiplier les voies de conduction électronique dans le plan du substrat et d'atteindre des valeurs de conductivité compatibles avec l'application visée : 5×10²-10⁴ S/cm et de préférence 10³-10⁵ S/cm.

Les valeurs mesurées dans le plan du textile métallisé varient avec la nature du dépôt métallique : ainsi par exemple, le cuivre est un meilleur conducteur que le nickel. Sa conductivité volumique est de 5,8×10⁵ S/cm (Cu) pour 1,46×10⁵ S/cm pour le nickel. Celle de l'or est intermédiaire : 4,4×10⁵ S/cm.

La conductivité électronique augmente avec l'épaisseur du dépôt et reflète également la qualité de l'adhésion sur le substrat polymère, qui peut varier suivant sa nature et sa structure.

Les étapes initiales de traitement de surface ainsi que la sous-couche sont optimisées pour augmenter l'affinité entre le polymère et la solution et ainsi améliorer la force d'adhésion de la couche métallique déposée.

En comparaison, la conductivité électronique dans le plan des couches de diffusion gazeuse en fibre de carbone utilisées dans les empilements est de l'ordre de 10² S/cm, une valeur qui est environ un ordre de grandeur inférieure à la conductivité requise pour l'application visée comme piste de connexion dans une géométrie de pile à combustible de type enroulé.

Les différents métaux constituant la couche externe métallique, Au, Sn ou NiP, possèdent de bonnes caractéristiques anticorrosion afin de supporter les conditions oxydantes à la cathode et sont peu oxydés et/ou dissous dans les conditions de forte acidité et de forte humidité relative de la pile.

En particulier, l'or est très stable dans ces milieux et peut être avantageusement déposé en fine couche en recouvrement du dépôt principal de NiP par exemple. Sa forte malléabilité en fait également un métal de choix, au moins en tant que dépôt externe, pour préserver l'intégrité et la tenue d'un dépôt constitutif d'une piste de connexion flexible.

Une couche mince externe d'or peut être déposée de préférence par une technique physique sous vide (PVD) ou chimique en phase vapeur (CVD).

Les bandelettes reçoivent ensuite un traitement hydrophobe.

L'utilisation d'un textile polymère métallisé comme piste de connexion flexible et couche de diffusion gazeuse pour pile à combustible rend nécessaire un traitement chimique supplémentaire du substrat brut. Ce traitement est appliqué en volume et/ou en surface, il est destiné à conférer au substrat des propriétés partiellement hydrophobes qui permettront l'évacuation de l'eau générée par la pile en fonctionnement à l'extérieur par la double bande de distribution des gaz.

Dans les empilements de piles classiques, les couches de diffusion gazeuse en fibres de carbone sont traitées en volume par une solution ou une émulsion de polytétrafluorure d'éthylène (PTFE).

Elles sont aussi optionnellement recouvertes par pulvérisation sur une ou deux faces d'une couche microporeuse à base de carbone nanoporeux et de PTFE comme décrit par exemple dans le document US 6,277,513 B1 afin d'améliorer la gestion de l'eau au niveau du coeur de pile et d'optimiser le contact électrique et fluidique entre les électrodes et la couche de diffusion gazeuse.

Ces traitements requièrent une étape de frittage du PTFE à 340 °C environ, qui est interdite dans le cadre de l'invention présente en raison de l'utilisation d'un polymère synthétique.

Un traitement hydrophobe à basse température est ici nécessaire, ce traitement pouvant être fait par enduction ou pulvérisation.

Ce traitement met éventuellement en oeuvre des polymères alternatifs utilisables en solution ou en émulsion, de nature hydrophobe et dont la perméabilité est compatible avec le passage des gaz réactants à travers la couche formée.

Les propriétés du Téflon servent de référence en termes de perméabilité et d'hydrophobie.

Le revêtement formé doit offrir une bonne adhésion et une bonne résistance mécanique une fois sur son support métallisé, puis une fois enroulé, et être chimiquement compatible avec l'environnement de la pile à combustible (environnement acide faible, cycles thermiques...). Il doit enfin pouvoir être déposé et atteindre ses caractéristiques finales à basse température < 180 °C.

Le polymère sélectionné fait de préférence partie de la classe des thermoplastiques élastomères, ce qui lui confère la flexibilité nécessaire à l'application. Il possède de préférence des fonctions vinyliques.

Afin que le polymère puisse fluer et recouvrir uniformément les fibres d'une couche hydrophobe et perméable aux gaz on réalise une opération dite de frittage du polymère.

Cette opération consiste à porter le polymère à une température dite de frittage, c'est à dire une température entre la température de transition vitreuse et la température de fusion du polymère et proche de cette dernière.

Dans le cadre de la présente invention, cette température est de préférence comprise entre 80 et 180 °C, idéalement entre 100 et 160°C.

Les polymères typiquement retenus sont des élastomères hydrophobes à fonctions vinyliques aromatiques tels que les copolymères à blocs tels que le poly(Styrène-Ethylène-Butadiène-Styrène) (SEBS), le poly(Styrène-Butadiène-Styrène) (SBS) ou le poly(Styrène-Ethylène-Propylène-Styrène) (SEPS), des élastomères hydrophobes à fonctions vinyliques simples tels que l'homopolymère poly(butadiène) hydroxylé (PBu), les copolymères tels que le poly(Butadiène-Octène) (PBO), le poly(Ethylène-Octène) (PEO) ou le poly(Butadiène-Propylène) (PBP), ou encore des fluoropolymères thermoplastiques à fonctions vinyliques tels que le poly(DiFluorure de Vinylidène) (PVDF), le copolymère poly(DiFluorure de Vinylidène (PVDF)-HexaFluoroPropylène (HFP)) ou le poly(difluorure de vinylidène-co-trifluoroéthylène) (PVDF-TrFE).

Certains grades peuvent être avantageusement greffés afin d'une part de renforcer les propriétés d'adhésion du polymère sur le substrat métallisé et d'autre part d'augmenter la polarité du polymère ce qui facilite sa mise en solution. Le taux de greffage est compris entre 0,01 et 2,0%, de préférence entre 0,05 et 1,7%.

Le polymère préféré est l'élastomère SEBS et le grade préféré est le SEBS greffé par l'anhydride maléique, connu sous la marque commerciale Kraton FG 1901X. Un autre polymère préféré est le copolymère PVDF-HFP et les grades préférés sont connus sous les marques commerciales Kynar ADXFlex 2000, Superflex 2500 et Latex RC-1 0.206.

Dans le cas des élastomères à fonctions vinyliques aromatiques le solvant adéquat est notamment choisi parmi les hydrocarbures aromatiques comme le toluène mais pour les grades rendus faiblement polaires par greffage, il peut être avantageusement choisi parmi les esters, les éthers et les cétones. Les solvants préférés sont peu toxiques et peu coûteux.

Dans la famille des acétates (esters) notre sélection inclut l'acétate de n-butyle, l'acétate d'isobutyle, l'acétate de n-propyle et l'acétate d'isopropyle. En raison de sa non-toxicité et de son faible coût, l'acétate de n-butyle est préféré. Dans la famille des éthers, notre sélection inclut le diméthoxyméthane, le tert-butylméthyléther (MTBE) et le tétrahydrofurane (THF). En raison de leur faible nocivité pour l'environnement, les deux premiers solvants sont préférés. Dans la famille des cétones, notre sélection inclut la diéthylcétone, la méthylisobutylcétone (MIBK) et la méthyléthylcétone (MEK). Un autre solvant possible des polymères fluorés est par exemple la n-méthylpyrrolidone (NMP). On peut également utiliser un mélange de plusieurs solvants incluant ou non un solvant différent de la liste précédente en fonction des propriétés de dissolution recherchées.

Le polymère peut être totalement ou partiellement dissous dans le solvant ou le mélange de solvants et on obtient alors une solution ou une suspension colloïdale. La nature du mélange, solution ou suspension colloïdale, dépend des interactions entre les chaînes polymères et les molécules de solvant. Une formulation de type latex en suspension aqueuse, peut également être utilisée. La mise en solution s'effectue par agitation magnétique ou mécanique à une température comprise entre la température ambiante et 80 °C.

La concentration massique de la solution est comprise entre 1 et 20%, de préférence entre 2 et 10%.

Le traitement hydrophobe est effectué de préférence à une température inférieure à 80 °C, si possible inférieure à 50 °C, et idéalement à température ambiante si la solubilité du polymère hydrophobe est suffisante dans ces conditions.

Le traitement hydrophobe peut être effectué par enduction libre (trempage), peinture ou pulvérisation. Afin d'assurer une meilleure imprégnation des fibres métallisées dans l'épaisseur, la méthode par enduction libre est préférée. Un à cinq trempages successifs peuvent être nécessaires à l'obtention de propriétés hydrophobes optimales, et de préférence un à trois. Idéalement, un ou deux trempages suffisent.

Après enduction, les pistes de connexion métallisées sont ventilées sous hotte ou séchées sous vide si le point d'ébullition du solvant ou du mélange de solvants est élevé. Elles sont ensuite frittées dans une étuve à une température supérieure à la température de transition vitreuse du polymère hydrophobe, et légèrement inférieure à son point de fusion. La durée du frittage est comprise entre 30 minutes et 2 heures, de préférence elle est de 1 heure. L'étape de frittage peut être effectuée après chaque enduction ou à l'issue des différentes enductions nécessaires à l'obtention des propriétés hydrophobes optimales.

Après le traitement hydrophobe par enduction, le substrat métallisé possède une charge en polymère comprise entre 0,5 et 50% massique. La charge optimale est comprise entre 1 et 20%.

La conductivité électrique dans le plan n'est pas altérée de plus de 10% de sa valeur initiale, idéalement de 5% à la suite de ce traitement car l'épaisseur du revêtement de polymère est relativement faible et le revêtement n'est pas continu sur l'ensemble des fibres métallisées. Le polymère recouvre préférentiellement les intersections de fibres et sur les fibres elles-mêmes la couche est très fine ou partielle. Certaines zones en particulier au coeur du textile sont dépourvues de dépôt ce qui permet de conserver la conductivité électrique ainsi qu'une tension de surface mixte de type hydrophile/hydrophobe compatible avec l'application visée comme couche de diffusion gazeuse dans une pile à combustible.

Alternativement, le traitement hydrophobe par enduction peut inclure un matériau conducteur poreux qui permet à la fois de maintenir la conductivité du tissu métallisé brut et d'ajouter un réseau de porosités supplémentaires de taille inférieure dans sa structure. Cette porosité supplémentaire, dont la distribution des tailles est centrée sur une valeur inférieure à 1 µm, et de préférence comprise entre 0,1 et 0,5 µm, vise à modifier favorablement le régime d'évacuation de l'eau générée dans la pile à combustible. En raison de sa haute résistance à la corrosion, de la grande variété de microstructures disponibles et de sa disponibilité commerciale, le carbone est le matériau de choix.

On utilise des nanopoudres de type noir de carbone, des nanofibres de carbone ou des nanotubes de carbone. Ces produits sont ajoutés à la solution ou à la dispersion de polymère hydrophobe dans un rapport polymère/carbone compris entre 10/90 et 50/50, de préférence entre 20/80 et 30/70. La concentration massique de la solution de trempage est comprise entre 2 et 20% massique ; idéalement elle est comprise entre 5 et 10% massique.

Après le traitement hydrophobe par enduction alternatif, le substrat métallisé possède une charge en polymère/carbone comprise entre 0,5 et 50% massique. La charge optimale est comprise entre 10 et 50%. Selon ce procédé par enduction libre, les deux faces des substrats sont recouvertes par le mélange microporeux composé de noir de carbone et de polymère hydrophobe. Le substrat est plus ou moins imprégné dans son épaisseur en fonction de ses propriétés absorbantes vis-à-vis de la solution d'enduction ainsi que de la viscosité de celle-ci.

Le traitement du textile métallisé peut être réalisé en deux temps ou ne comporter qu'une seule des deux étapes décrites précédemment.

Si le traitement est réalisé en deux temps, un premier traitement est alors un traitement par enduction d'une solution ou d'une dispersion de polymère hydrophobe seul.

A l'issue de ce premier traitement, avant ou après l'étape de frittage du polymère, un mélange de polymère hydrophobe et de carbone est déposé à la surface d'une ou des deux faces du textile et forme une couche microporeuse.

Cette couche sert à la fois à améliorer la qualité de l'interface électrique entre les électrodes et la piste de connexion, donc à limiter les pertes ohmiques dans la pile, et à améliorer la gestion de l'eau libérée lors de son fonctionnement.

Le mélange de polymère hydrophobe et de carbone déposé en surface, grâce à la distribution de taille nanométrique de ses pores, de 100 à 500 nm, forme une barrière partielle au passage de l'eau générée à la cathode et favorise sa diffusion vers l'anode à travers la membrane protonique. Ce processus améliore le taux d'humidification de la membrane et augmente sa conductivité ionique ce qui limite les pertes ohmiques dans le système.

Compte tenu de la géométrie enroulée en spirale de la pile à combustible décrite dans l'invention, seules les surfaces faisant face aux cathodes et/ou aux anodes ou bien les deux faces des substrats métallisés peuvent être enduites d'une couche microporeuse par ce second traitement car les dépôts sont successifs et indépendants.

Le polymère utilisé dans la couche microporeuse du second traitement est choisi dans la liste précédente. Il peut être identique ou différent du polymère hydrophobe utilisé pour l'étape d'enduction. Le carbone utilisé peut être constitué de nanopoudre de type noir de carbone ou noir d'acétylène, de nanofibres ou de nanotubes de carbone. La composition du mélange polymère/carbone est typiquement comprise entre un rapport massique de 20/80 et 30/70. Le polymère est préalablement dissous avant mélange avec le noir de carbone.

Le mélange est obtenu de préférence sous la forme d'une encre, c'est-à-dire une émulsion de viscosité relativement élevée dans laquelle les nanoparticules de carbone et les molécules de polymère sont fortement dispersées dans le milieu.

Le solvant utilisé est de préférence un mélange de deux ou plusieurs solvants miscibles entre eux mais de constante diélectrique différente : l'un au moins est un solvant adapté au polymère hydrophobe et l'autre pouvant être moins efficace.

Le premier solvant est choisi parmi la liste de solvants décrite précédemment et le(s) second(s) solvant(s) est (sont) choisi(s) de préférence dans la famille des alcools, comme l'éthanol ou l'isopropanol par exemple.

La composition volumique du mélange de solvants peut varier en toutes proportions compatibles avec une miscibilité totale, et pour autant qu'elle puisse permettre d'obtenir une émulsion à partir des deux éléments constitutifs, le polymère hydrophobe et le carbone nanoporeux.

L'un de ces solvants peut avoir un rôle supplémentaire de stabilisant de la suspension en maintenant les forces d'interaction des différents éléments. Il peut également améliorer la texture, le liant de l'encre, ainsi que sa capacité à couvrir uniformément le substrat.

Ce solvant ou adjuvant est choisi de préférence dans la famille des polyalcools. Il peut s'agir de glycérol ou de propylène glycol par exemple. Il est ajouté en petite quantité lors de la formulation de l'encre : son pourcentage massique dans le solvant peut varier de 0 à 10%, il est typiquement de quelques %.

L'émulsion est obtenue de préférence par la méthode des ultrasons ou par mélange mécanique sous fort cisaillement de la solution initiale. La procédure est effectuée à température ambiante. Elle a une durée qui peut varier de 30 minutes à quelques heures selon la méthode et les paramètres de mélange tels que la fréquence des ultrasons et la vitesse de rotation du moteur.

L'encre est ensuite déposée par pulvérisation manuelle ou par toute autre méthode automatique ou semi-automatique de dépôt de couches minces à partir d'encres, parmi lesquelles on peut citer les techniques sérigraphique, par pulvérisation, par jet d'encre.

Les différentes méthodes automatiques par rouleaux successifs peuvent avantageusement être utilisées en raison de la flexibilité des pistes de connexion à traiter et du processus de fabrication en mode continu recherché pour la mise en oeuvre de la pile.

Le dépôt est suivi d'une étape de frittage dans une étuve à une température supérieure à la température de transition vitreuse du polymère hydrophobe, et légèrement inférieure à son point de fusion. Une couche microporeuse est formée à la surface du textile et pénètre en partie dans l'épaisseur du textile. Le taux de pénétration dépend de la viscosité du mélange et de la quantité déposée.

L'épaisseur finale de la couche microporeuse est comprise entre 10 et 100µm.

Grâce aux propriétés élastiques des polymères hydrophobes choisis et à leur excellente adhésion sur la piste de connexion métallisée, la flexibilité de celle-ci n'est pas altérée de façon significative à l'issue du ou des traitements hydrophobes et l'enroulement en spirale selon le principe initial est possible.

De même l'utilisation de carbone et la réalisation de couches minces n'altère pas la conductivité électrique de la piste de connexion. En conséquence ce traitement permet d'ajouter aux propriétés de conduction électronique et de transfert des gaz réactants la capacité d'évacuer efficacement l'eau générée par la pile. Il permet aussi l'optimisation des interfaces électriques. L'édifice obtenu est à la fois piste de connexion et couche de diffusion gazeuse pour pile à combustible à géométrie enroulée.

La figure 5 schématise un convertisseur électrochimique en spirale qui comporte une bande porteuse de cellules électrochimiques unitaires dont des bandelettes relient les anodes et cathodes successives pour que les cellules soient mises en série, une couverture élastomère 6 munie de passages 7 dans une direction longitudinale de la bande d'un côté de la bande pourvu des anodes, un film ondulé 3, du côté de la bande portant les cathodes, dont les ondulations sont alignées de manière transversale à la bande 2, ladite bande, ladite couverture 6 et ledit film 3 étant enroulés en spirale en sorte de former un convertisseur électrochimique compact cylindrique 17.

L'alimentation en air A du convertisseur se fait dans une direction parallèle à l'axe du cylindre, le film ondulé formant une barrière de séparation d'air de refroidissement 4 et d'air d'alimentation des cathodes 5.

Le circuit d'hydrogène H₂ est réalisé à partir de tubulures d'arrivée 21 a et de départ 21 b, ces tubulures étant mises en communication avec les passages 7 par des conduits 22 reliant une fente réalisée dans la tubulure et l'extrémité de la couverture 6.

la tubulure de sortie d'hydrogène, le conduit de sortie de forme plane et la fin de la couverture sont recouverts par un cache 23, par exemple réalisé avec une résine ou un matériau composite étanche.

Du côté de l'entrée d'hydrogène dans l'axe du cylindre formé par la pile enroulée, le raccordement de la tubulure 21 a peut se faire par un conduit souple, l'espace central de la pile étant éventuellement comblé avec un matériau de remplissage. Pour fabriquer un tel convertisseur, on assemble les cellules sur la bande porteuse par exemple comme vu plus haut en emprisonnant les cellules entre deux feuillards munis de fenêtres, dans un premier temps on insère les bandelettes dans la bande au niveau de fentes réalisées dans cette dernière et on les applique sur les faces des cellules.

Ensuite, il faut coller les bandelettes et reboucher les fentes.

Un collage étanche et souple doit être réalisé au niveau de la traversée de la piste de connexion entre deux ensembles membrane-électrodes successifs afin de ne pas mélanger les gaz réactants air et hydrogène.

Le niveau d'étanchéité attendu est une fuite d'hydrogène maximale de 100 ppm côté air, et de préférence inférieure à 50 ppm.

Un procédé de collage utilisant une résine polymérisant en température et/ou aux ultraviolets, ou un film adhésif thermoplastique est prévu.

La colle ou l'adhésif choisi doit imprégner la piste de connexion dans son épaisseur sans diminuer la conduction électronique. L'ensemble doit rester assez flexible après collage pour permettre l'enroulement de la bande en spirale.

La résine sans solvant peut être choisie dans la famille des silicones, acrylates, uréthane acrylates, époxys modifiées.

En raison de leur plus grande résistance aux conditions d'acidité, d'humidité relative et de chaleur, les colles de type époxy et silicone sont préférées. Leur viscosité est typiquement comprise entre 0,3 et 50 Pa s, la viscosité optimale de la colle dépendant de l'épaisseur de la bandelette et de la densité de fibres du matériau poreux. Leur dureté en shore D est comprise entre 25 et 90, de préférence entre 30 et 70.

Dans tous les cas la durée de réticulation de la colle n'est pas supérieure à 60 s. De préférence un apport de température n'est pas nécessaire. La quantité de colle déposée est optimisée afin d'assurer une étanchéité totale de la traversée. Le mode de dépose peut être manuel par exemple au moyen d'une seringue fine, semi-automatique ou automatique par exemple au moyen d'un robot par contact ou projection. Il est possible de déposer un seul cordon sur une face de la bande des coeurs de pile, ou de déposer deux cordons, un sur chaque face, simultanément en mode automatique, ou successivement en mode manuel ou semi-automatique.

La largeur du cordon est comprise entre 1 et 5 mm, de préférence entre 1 et 2 mm. Sa hauteur est comprise entre 0,1 et 1 mm, de préférence entre 0,1 et 0,5 mm.

Si on utilise un film adhésif thermoplastique, il peut être choisi dans la famille des polyoléfines modifiées, des polyesters, des polyamides, et des polyétheramides. Il peut être appliqué sous pression et/ou température. Une ou deux bandes de film adhésif peuvent être appliquées au niveau de la traversée.

La largeur de la bande adhésive est comprise entre 2 et 10 mm, de préférence entre 2 et 5 mm. Son épaisseur peut être comprise entre 50 et 300 µm. La température du procédé est comprise entre 110 et 150 °C, et la pression appliquée entre 10 et 100 psi.

L'étanchéité entre la face recevant les anodes et la face recevant les cathodes est réalisée en effectuant le collage le long de la traversée sur une face ou sur les deux faces, en tenant compte des propriétés d'imprégnation de l'adhésif ou de la résine utilisée et les conditions d'application sélectionnées.

Ensuite, on applique la couverture 6 sur la bande côté anodes, on dispose le film ondulé sur le côté de la couverture élastomère opposé aux canaux longitudinaux puis on enroule la bande recouverte de la couverture et du film ondulé sur elle même ou sur un mandrin 20 de sorte qu'une face du film ondulé vienne en contact avec la face de la bande portant les cathodes.

Enrouler la pile sur elle même apporte une certaine compacité et offre un facteur de forme plus propice à une intégration dans un système.

En outre, enrouler la pile sur elle-même favorisera une homogénéité thermique entre les différentes cellules, la chaleur générée par la réaction électrochimique du côté cathodique se propageant d'une cellule à l'autre par contact entre les différentes strates de la bobine formée.

Pour terminer le convertisseur, on connecte électriquement les cellules extrêmes de la bande à des contacts de sortie, on place un embout d'alimentation en hydrogène sur la terminaison des canaux longitudinaux 7 externe à l'enroulement, un embout de récupération d'hydrogène au niveau de l'axe central ou du mandrin 20 du convertisseur que l'on place dans un tube dont les extrémités servent respectivement d'arrivée et de sortie d'air.

## Revendications

1. Bandelette (12) de liaison d'anodes (A⁻) et de cathodes (C⁺) d'un convertisseur électrochimique **caractérisé en ce qu'**elle est réalisée à partir d'un substrat poreux flexible métallisé recouvert d'un revêtement hydrophobe au moins dans des zones de contact avec lesdites anodes et/ou cathodes, le substrat poreux comportant une base polymère et le revêtement hydrophobe comprenant un polymère thermoplastique élastomère comportant des fonctions vinyliques et un matériau conducteur poreux.

2. Bandelette selon la revendication 1 pour laquelle le substrat poreux est à base de matériau tissé.

3. Bandelette selon la revendication 1 pour laquelle le substrat poreux est à base de matériau non tissé.

4. Bandelette selon l'une quelconque des revendications précédentes pour laquelle la base polymère est choisie parmi une base polyamide, polyester, aramide ou une combinaison d'au moins deux de ces matériaux.

5. Bandelette selon l'une quelconque des revendications 1 à 3 pour laquelle le substrat poreux est formé d'un copolymère à base de polyester.

6. Bandelette selon l'une quelconque des revendications précédentes pour laquelle l'épaisseur du substrat est entre 100 et 600 µm.

7. Bandelette selon la revendication 6 pour laquelle l'épaisseur du substrat est entre 150 et 300 µm.

8. Bandelette selon l'une quelconque des revendications précédentes pour laquelle la densité du substrat est comprise entre 50 et 200 g/m2.

9. Bandelette selon la revendication 8 pour laquelle la densité du substrat est comprise entre 60 et 120 g/m2.

10. Bandelette selon l'une quelconque des revendications précédentes pour laquelle la métallisation du substrat est faite avec un métal choisi parmi Cu, Au, Sn, Ni, NiP ou leurs alliages.

11. Bandelette selon la revendication 10 pour laquelle l'épaisseur du dépôt de métallisation est comprise entre 0,5 et 20 µm.

12. Bandelette selon la revendication 11 pour laquelle l'épaisseur du dépôt de métallisation est comprise entre 1 et 10 µm.

13. Bandelette selon l'une quelconque des revendications 10 à 12 pour laquelle la densité surfacique de métallisation est comprise entre 25 et 300 g/m2.

14. Bandelette selon la revendication 13 pour laquelle la densité surfacique de métallisation est comprise entre 50 et 200 g/m2.

15. Bandelette selon l'une quelconque des revendications précédentes pour laquelle le matériau du revêtement hydrophobe est un matériau se déposant à une température inférieure à 180 °C.

16. Bandelette selon l'une quelconque des revendications précédentes pour laquelle le polymère du revêtement hydrophobe est choisi parmi les poly(Styrène-Ethylène-Butadiène-Styrène) (SEBS), poly(Styrène-Butadiène-Styrène) (SBS), poly(Styrène-Ethylène-Propylène-Styrène) (SEPS), homopolymère poly(butadiène) hydroxylé (PBu), poly(Butadiène-Octène) (PBO), poly(Ethylène-Octène) (PEO), poly(Butadiène-Propylène) (PBP), poly(DiFluorure de Vinylidène) (PVDF), le copolymère poly(DiFluorure de Vinylidène (PVDF)-HexaFluoroPropylène (HFP)) ou le poly(difluorure de vinylidène-co-trifluoroéthylène) (PVDF-TrFE) ou le poly(Styrène-Ethylène-Butadiène-Styrène) (SEBS) greffé par l'anhydride maléique.

17. Bandelette selon l'une quelconque des revendications précédentes pour laquelle le matériau conducteur poreux est choisi parmi les nanopoudres de noir de carbone, les nanofibres de carbone ou les nanotubes de carbone.

18. Bandelette selon la revendication 17 pour laquelle le rapport polymère/carbone est compris entre 10/90 et 50/50.

19. Bandelette selon la revendication 18 pour laquelle le rapport polymère/carbone est compris entre 20/80 et 30/70.

20. Bandelette selon l'une des revendications 17 à 19 **caractérisé en ce qu'**elle possède une charge en polymère/carbone comprise entre 5 et 50% massique.

21. Convertisseur électrochimique comportant une bande porteuse (2) de cellules unitaires **caractérisé en ce qu'**il comprend des seconds substrats sous forme de bandelettes (12) selon l'une quelconque des revendications précédentes réalisant des pistes de connexion traversant la bande porteuse pour relier des anodes des cellules à des cathodes de cellules adjacentes.

22. Convertisseur électrochimique selon la revendication 21 **caractérisé en ce que** les bandelettes (12) traversent la bande porteuse (2) par des fentes de passage (11), une colle ou un film adhésif thermoplastique (16) refermant les fentes de manière imperméable aux gaz.

23. Convertisseur électrochimique selon la revendication 22 **caractérisé en ce que** la colle comprend une résine polymérisant en température et/ou aux ultraviolets.

24. Convertisseur électrochimique selon la revendication 23 **caractérisé en ce que** la résine est une résine sans solvant choisie dans la famille des silicones, acrylates, uréthane acrylates, époxys modifiées.

25. Convertisseur électrochimique selon l'une quelconque des revendications 22 à 24 **caractérisé en ce que** la viscosité de la colle est choisie en fonction de l'épaisseur de la bandelette et de la densité de fibres du matériau poreux.

26. Convertisseur électrochimique selon la revendication 25 **caractérisé en ce que** la viscosité de la colle est comprise entre 0,3 et 50 Pa s.

27. Convertisseur électrochimique selon l'une quelconque des revendications 22 à 26 **caractérisé en ce que** la colle est adaptée à imprégner la piste de connexion dans son épaisseur sans diminuer la conduction électronique.

28. Convertisseur électrochimique selon la revendication 22 **caractérisé en ce que** le film adhésif thermoplastique (16) refermant les fentes de manière imperméable aux gaz est choisi dans la famille des polyoléfines modifiées, des polyesters, des polyamides, et des polyétheramides.

29. Convertisseur électrochimique selon la revendication 22 **caractérisé en ce que** la largeur du film adhésif est comprise entre 2 et 10 mm, de préférence entre 2 et 5 mm, son épaisseur étant comprise entre 50 et 300 µm.

30. Procédé de réalisation de bandelettes flexibles de liaison d'anodes et de cathodes d'un convertisseur électrochimique **caractérisé en ce que**
- on choisit un substrat poreux comportant une base polymère parmi les revendications 2 à 5,
- on procède à une étape de métallisation du substrat avec un métal parmi Cu, Au, Sn, Ni, NiP et/ou leurs alliages,
- on soumet la bandelette métallisée à un traitement hydrophobe à température inférieure à 80 ° par enduction ou pulvérisation mettant en oeuvre un ou plusieurs_polymères thermoplastiques élastomères comportant des fonctions vinyliques utilisables en solution ou en émulsion, de nature hydrophobe et dont la perméabilité est compatible avec le passage des gaz réactants à travers la couche formée, lesdits un ou plusieurs polymères de nature hydrophobe faisant partie de la classe des thermoplastiques élastomères.

31. Procédé de réalisation de bandelettes de liaison d'anodes et de cathodes d'un convertisseur électrochimique selon la revendication 30 **caractérisé en ce que** l'étape de métallisation comprend une ou plusieurs préparations de surface du substrat des bandelettes suivies d'étapes en solution dont au moins un dépôt chimique sur les fibres isolantes avec Cu ou NiP et un ou plusieurs dépôts galvanostatiques, l'étape de métallisation étant une étape dérivée de la voie auto-catalytique complétée par une agitation mécanique en continu et se poursuit jusqu'à obtenir une épaisseur totale du dépôt autour des fibres polymères comprise entre 0,5 et 20 µm, de préférence entre 1 et 10 µm

32. Procédé de réalisation de bandelettes selon la revendication 30 ou 31 **caractérisé en ce que**, pour soumettre la bandelette au traitement hydrophobe, on réalise une opération dite de frittage du polymère.

33. Procédé de réalisation de bandelettes selon l'une quelconque des revendications 30 à 32 **caractérisé en ce que**, pour soumettre la bandelette au traitement hydrophobe, ou dissout au moins partiellement dans un solvant ou un mélange de solvants en sorte d'obtenir une solution ou une suspension colloïdale.

34. Procédé de réalisation de bandelettes selon l'une quelconque des revendications 30 à 32 **caractérisé en ce que**, pour soumettre la bandelette au traitement hydrophobe, on utilise une formulation de type latex en suspension aqueuse.

35. Procédé de réalisation de bandelettes selon la revendication 34 **caractérisé en ce que** on effectue la mise en solution par agitation magnétique ou mécanique à une température comprise entre la température ambiante et 80°C.

36. Procédé de réalisation de bandelettes selon l'une quelconque des revendications 30 à 35 **caractérisé en ce que** on réalise le traitement hydrophobe par enduction libre.

37. Procédé de réalisation de bandelettes selon l'une quelconque des revendications 30 à 36 **caractérisé en ce qu'**après enduction, on retire le ou les solvants et on réalise une opération de frittage du polymère du traitement hydrophobe dans une étuve à une température supérieure à la température de transition vitreuse du polymère hydrophobe, et légèrement inférieure à son point de fusion.

38. Procédé de réalisation de bandelettes selon la revendication 32 ou 37 **caractérisé en ce que** la température de frittage est inférieure à 180 °C.

39. Procédé de réalisation de bandelettes selon la revendication 36 **caractérisé en ce que** le traitement hydrophobe par enduction inclut un matériau conducteur poreux de porosité dont la distribution des tailles est inférieure à 1 µm.

40. Procédé de réalisation de bandelettes selon la revendication 39 **caractérisé en ce que** le matériau conducteur poreux est choisi parmi des nanopoudres de type noir de carbone, des nanofibres de carbone ou des nanotubes de carbone.

41. Procédé de réalisation de bandelettes selon la revendication 40 **caractérisé en ce qu'**on ajoute le matériau conducteur poreux à la dispersion de polymère hydrophobe dans un rapport polymère/carbone compris entre 10/90 et 50/50, de préférence entre 20/80 et 30/70.

## Patentansprüche

1. Streifen (12) zur Verbindung von Anoden (A-) und von Kathoden (C+) eines elektrochemischen Wandlers, **dadurch gekennzeichnet, dass** er ausgehend von einem porigen, biegsamen metallisierten Substrat, das mit einer Wasser abstoßenden Beschichtung mindestens in Berührungszonen mit den Anoden und/oder Kathoden bedeckt ist, hergestellt ist, wobei das porige Substrat eine Polymerbasis aufweist und die Wasser abstoßende Beschichtung einen elastomeren Polymerthermoplast, der Vinylfunktionen aufweist, und ein poriges leitendes Material aufweist.

2. Streifen nach Anspruch 1, bei dem das porige Substrat auf der Basis von Webmaterial ist.

3. Streifen nach Anspruch 1, bei dem das porige Substrat auf der Basis von Vlies ist.

4. Streifen nach einem der vorhergehenden Ansprüche, bei dem die Polymerbasis aus einer Polyamid-, Polyester-, Aramidbasis oder einer Kombination von mindestens zwei dieser Materialien ausgewählt ist.

5. Streifen nach einem der Ansprüche 1 bis 3, bei dem das porige Substrat aus einem Copolymer mit Polyesterbasis gebildet ist.

6. Streifen nach einem der vorhergehenden Ansprüche, bei dem die Stärke des Substrats zwischen 100 und 600 µm liegt.

7. Streifen nach Anspruch 6, bei dem die Stärke des Substrats zwischen 150 und 300 µm liegt.

8. Streifen nach einem der vorhergehenden Ansprüche, bei dem die Dichte des Substrats zwischen 50 und 200 g/m² liegt.

9. Streifen nach Anspruch 8, bei dem die Dichte des Substrats zwischen 60 und 120 g/m² liegt.

10. Streifen nach einem der vorhergehenden Ansprüche, bei dem die Metallisierung des Substrats mit einem Metall erfolgt, das aus Cu, Au, Sn, Ni, NiP oder ihren Legierungen besteht.

11. Streifen nach Anspruch 10, bei dem die Stärke der Metallisierungsablagerung zwischen 0,5 und 20 µm liegt.

12. Streifen nach Anspruch 11, bei dem die Stärke der Metallisierungsablagerung zwischen 1 und 10 µm liegt.

13. Streifen nach einem der Ansprüche 10 bis 12, bei dem die Metallisierungsoberflächendichte zwischen 25 und 300 g/m² liegt.

14. Streifen nach Anspruch 13, bei dem die Metallisierungsoberflächendichte zwischen 50 und 200 g/m² liegt.

15. Streifen nach einem der vorhergehenden Ansprüche, bei dem das Material der Wasser abstoßenden Beschichtung ein Material ist, das sich bei einer Temperatur unter 180 °C abgelagert.

16. Streifen nach einem der vorhergehenden Ansprüche, bei dem das Polymer der Wasser abstoßenden Oberfläche ausgewählt wird aus Poly(styrol-ethylen-butadien-styrol) (SEBS), Poly(styrolbutadien-styrol) (SBS), Poly(styrol-ethylen-propylen-styrol) (SEPS), hydroxyliertem Poly(butadien)-Homopolymer (PBu), Poly(butadien-octen) (PBO), Poly(ethylen-octen) (PEO), Poly(butadien-propylen) (PBP), Poly(vinylidendifluorid) (PVDF), Poly(vinylidendifluorid(PVDF)-Hexafluorpropylen (HFP))-Copolymer oder Poly(vinylidendifluorid-co-trifluorethylen) (PVDF-TrFE) oder Maleinanhydridgepropftem Poly(styrol-ethylen-butadien-styrol) (SEBS).

17. Streifen nach einem der vorhergehenden Ansprüche, bei dem das leitende porige Material aus den Rußschwarz-Nanopulvern, Kohlenstoff-Nanofasern oder Kohlenstoff-Nanoröhren ausgewählt ist.

18. Streifen nach Anspruch 17, bei dem das Verhältnis Polymer/Kohlenstoff zwischen 10/90 und 50/50 liegt.

19. Streifen nach Anspruch 18, bei dem das Verhältnis Polymer/Kohlenstoff zwischen 20/80 und 30/70 liegt.

20. Streifen nach einem der Ansprüche 17 bis 19, **dadurch gekennzeichnet, dass** er eine Polymer/Kohlenstoff-Füllung zwischen 5 und 50 Masse-% besitzt.

21. Elektrochemischer Wandler, der ein Trägerband (2) einzelner Zellen aufweist, **dadurch gekennzeichnet, dass** er zweite Substrate in der Form von Streifen (12) nach einem der vorhergehenden Ansprüche aufweist, die Anschlussbahnen herstellen, die das Trägerband durchqueren, um Anoden der Zellen mit Kathoden benachbarter Zellen zu verbinden.

22. Elektrochemischer Wandler nach Anspruch 21, **dadurch gekennzeichnet, dass** die Streifen (12) das Trägerband (2) durch Durchgangsschlitze (11) durchqueren, wobei ein Klebstoff oder ein Thermoplast-Klebeband (16) die Schlitze gasundurchlässig wieder verschließt.

23. Elektrochemischer Wandler nach Anspruch 22, **dadurch gekennzeichnet, dass** der Klebstoff ein bei Temperatur und/oder Ultraviolettstrahlen polymerisierendes Harz aufweist.

24. Elektrochemischer Wandler nach Anspruch 23, **dadurch gekennzeichnet, dass** das Harz ein lösemittelfreies Harz ist, das aus der Familie der Silikone, Acrylate, Urethanacrylate, modifizierten Epoxidharze ausgewählt ist.

25. Elektrochemischer Wandler nach einem der Ansprüche 22 bis 24, **dadurch gekennzeichnet, dass** die Viskosität des Klebstoffes in Abhängigkeit von der Stärke des Streifens und der Faserdichte des porigen Materials ausgewählt ist.

26. Elektrochemischer Wandler nach Anspruch 25, **dadurch gekennzeichnet, dass** die Viskosität des Klebstoffes zwischen 0,3 und 50 Pa s liegt.

27. Elektrochemischer Wandler nach einem der Ansprüche 22 bis 26, **dadurch gekennzeichnet, dass** der Klebstoff angepasst ist, um die Anschlussbahn in ihrer Stärke zu imprägnieren, ohne die elektronische Leitung zu verringern.

28. Elektrochemischer Wandler nach Anspruch 22, **dadurch gekennzeichnet, dass** die Thermoplast-Klebefolie (16), die die Schlitze gasundurchlässig wieder verschließt, aus der Familie der modifizierten Polyolefine, Polyester, Polyamide und Polyetheramide ausgewählt ist.

29. Elektrochemischer Wandler nach Anspruch 22, **dadurch gekennzeichnet, dass** die Breite der Klebefolie zwischen 2 und 10 mm, vorzugsweise zwischen 2 und 5 mm liegt, wobei ihre Stärke zwischen 50 und 300 µm liegt.

30. Verfahren zur Herstellung biegsamer Streifen für die Verbindung von Anoden und Kathoden eines elektrochemischen Wandlers, **dadurch gekennzeichnet, dass**
- man ein poriges Substrat auswählt, das eine Polymerbasis gemäß den Ansprüchen 2 bis 5 aufweist,
- man einen Metallisierungsschritt des Substrats mit einem Metall ausgewählt aus Cu, Au, Sn, Ni, NiP und/oder ihren Legierungen ausführt,
- man den metallisierten Streifen einer Wasser abstoßenden Behandlung bei einer Temperatur unter 80 °C durch Beschichten oder Sprühen unterzieht, wobei ein oder mehrere elastomere Thermoplastpolymere eingesetzt werden, die Vinylfunktionen aufweisen, die in Lösung oder in Emulsion verwendbar sind, die Wasser abstoßend beschaffen sind und deren Durchlässigkeit mit dem Durchgehen der Reaktionsgase durch die gebildete Schicht kompatibel ist, wobei der oder die Polymere mit Wasser abstoßender Beschaffenheit zu der Klasse der elastomeren Thermoplaste gehören.

31. Verfahren zur Herstellung von Streifen zur Verbindung von Anoden und Kathoden eines elektrochemischen Wandlers nach Anspruch 30, **dadurch gekennzeichnet, dass** der Metallisierungsschritt eine oder mehrere Oberflächenvorbereitungen des Substrats der Streifen aufweist, an die Schritte in Lösung anschließen, darunter mindestens eine chemische Ablagerung auf den isolierenden Fasern mit Cu oder NiP und eine oder mehrere galvanostatische Ablagerungen, wobei der Metallisierungsschritt ein Schritt ist, der von dem autokatalytischen Weg abgeleitet ist, ergänzt durch ein ununterbrochenes mechanisches Rühren, und der fortgesetzt wird, bis eine Gesamtstärke der Ablagerung um die Polymerfasern zwischen 0,5 und 20 µm, vorzugsweise zwischen 1 und 10 µm erzielt ist.

32. Verfahren zur Herstellung von Streifen nach Anspruch 30 oder 31, **dadurch gekennzeichnet, dass** man, um den Streifen der Wasser abstoßenden Behandlung zu unterziehen, einen so genannten Sintervorgang des Polymers ausführt.

33. Verfahren zur Herstellung von Streifen nach einem der Ansprüche 30 bis 32, **dadurch gekennzeichnet, dass** man, um den Streifen der Wasser abstoßenden Behandlung zu unterwerfen, ihn in einem Lösemittel oder einem Lösemittelgemisch mindestens teilweise derart auflöst, dass man eine Lösung oder eine kolloidale Suspension erzielt.

34. Verfahren zur Herstellung von Streifen nach einem der Ansprüche 30 bis 32, **dadurch gekennzeichnet, dass** man, um den Streifen der Wasser abstoßenden Behandlung zu unterziehen, eine Formulierung des Typs Latex in wässriger Suspension verwendet.

35. Verfahren zur Herstellung von Streifen nach Anspruch 34, **dadurch gekennzeichnet, dass** man das Lösen durch magnetisches oder mechanisches Rühren bei einer Temperatur zwischen der Umgebungstemperatur und 80 °C durchführt.

36. Verfahren zur Herstellung von Streifen nach einem der Ansprüche 30 bis 35, **dadurch gekennzeichnet, dass** man die Wasser abstoßende Behandlung durch freies Beschichten ausführt.

37. Verfahren zur Herstellung von Streifen nach einem der Ansprüche 30 bis 36, **dadurch gekennzeichnet, dass** man nach der Beschichtung das oder die Lösemittel entfernt und einen Sintervorgang des Polymers der Wasser abstoßenden Behandlung in einem Wärmeschrank bei einer Temperatur ausführt, die höher ist als die Glasübergangstemperatur des Wasser abstoßenden Polymers und leicht niedriger als sein Schmelzpunkt.

38. Verfahren zur Herstellung von Streifen nach Anspruch 32 oder 37, **dadurch gekennzeichnet, dass** die Sintertemperatur niedriger als 180 °C ist.

39. Verfahren zur Herstellung von Streifen nach Anspruch 36, **dadurch gekennzeichnet, dass** die Wasser abstoßende Behandlung durch Beschichtung ein leitendes poriges Material mit einer Porosität umfasst, deren Größenverteilung kleiner ist als 1 µm.

40. Verfahren zur Herstellung von Streifen nach Anspruch 39, **dadurch gekennzeichnet, dass** das leitende porige Material aus Nanopulvern des Typs Rußschwarz, den Kohlenstoff-Nanofasern oder den Kohlenstoff-Nanoröhren ausgewählt ist.

41. Verfahren zur Herstellung von Streifen nach Anspruch 40, **dadurch gekennzeichnet, dass** man das porige leitende Material zu der Dispersion aus Wasser abstoßendem Polymer in einem Verhältnis Polymer/Kohlenstoff zwischen 10/90 und 50/50, vorzugsweise zwischen 20/80 und 30/70 hinzufügt.

## Claims

1. Strip (12) for connecting anodes (A⁻) and cathodes (C⁺) of an electrochemical converter, **characterized in that** it is produced from a metallized flexible porous substrate covered with a hydrophobic coating at least in regions of contact with the said anodes and/or cathodes, the porous substrate comprising a polymer base and the hydrophobic coating comprising a thermoplastic elastomer polymer comprising vinyl functional groups and a porous conducting material.

2. Strip according to Claim 1, for which the porous substrate is based on woven material.

3. Strip according to Claim 1, for which the porous substrate is based on nonwoven material.

4. Strip according to any one of the preceding claims, for which the polymer base is chosen from a polyamide, polyester or aramid base or a combination of at least two of these materials.

5. Strip according to any one of Claims 1 to 3, for which the porous substrate is formed of a polyester-based copolymer.

6. Strip according to any one of the preceding claims, for which the thickness of the substrate is between 100 and 600 µm.

7. Strip according to Claim 6, for which the thickness of the substrate is between 150 and 300 µm.

8. Strip according to any one of the preceding claims, for which the density of the substrate is between 50 and 200 g/m².

9. Strip according to Claim 8, for which the density of the substrate is between 60 and 120 g/m².

10. Strip according to any one of the preceding claims, for which the metallization of the substrate is carried out with a metal chosen from Cu, Au, Sn, Ni, NiP or their alloys.

11. Strip according to Claim 10, for which the thickness of the metallization deposit is between 0.5 and 20 µm.

12. Strip according to Claim 11, for which the thickness of the metallization deposit is between 1 and 10 µm.

13. Strip according to any one of Claims 10 to 12, for which the metallization surface density is between 25 and 300 g/m².

14. Strip according to Claim 13, for which the metallization surface density is between 50 and 200 g/m².

15. Strip according to any one of the preceding claims, for which the material of the hydrophobic coating is a material which is deposited at a temperature of less than 180°C.

16. Strip according to any one of the preceding claims, for which the polymer of the hydrophobic coating is chosen from poly(Styrene-Ethylene-Butadiene-Styrene) (SEBS), poly(Styrene-Butadiene-Styrene) (SBS), poly(Styrene-Ethylene-Propylene-Styrene) (SEPS), hydroxylated poly(butadiene) homopolymer (PBu), poly(Butadiene-Octene) (PBO), poly(Ethylene-Octene) (PEO), poly(Butadiene-Propylene) (PBP), poly(Vinylidene DiFluoride) (PVDF), poly(Vinylidene DiFluoride (PVDF)-HexaFluoroPropylene (HFP)) copolymer or poly(Vinylidene DiFluoride-co-TriFluoroEthylene) (PVDF-TrFE) or poly(Styrene-Ethylene-Butadiene-Styrene) (SEBS) grafted with maleic anhydride.

17. Strip according to any one of the preceding claims, for which the porous conducting material is chosen from carbon black nanopowders, carbon nanofibres or carbon nanotubes.

18. Strip according to Claim 17, for which the polymer/carbon ratio is between 10/90 and 50/50.

19. Strip according to Claim 18, for which the polymer/carbon ratio is between 20/80 and 30/70.

20. Strip according to one of Claims 17 to 19, **characterized in that** it has a polymer/carbon charge of between 5% and 50% by weight.

21. Electrochemical converter comprising a carrier band (2) of unit cells, **characterized in that** it comprises second substrates in the form of strips (12) according to any one of the preceding claims producing connection tracks which cross the carrier band to connect anodes of the cells to cathodes of adjacent cells.

22. Electrochemical converter according to Claim 21, **characterized in that** the strips (12) cross the carrier band (2) via passage slits (11), an adhesive or a thermoplastic adhesive film (16) closing the slits in gas-tight fashion.

23. Electrochemical converter according to Claim 22, **characterized in that** the adhesive comprises a resin which polymerizes on heating and/or under ultraviolet radiation.

24. Electrochemical converter according to Claim 23, **characterized in that** the resin is a solvent-free resin chosen from the family of the silicones, acrylates, urethane acrylates or modified epoxys.

25. Electrochemical converter according to any one of Claims 22 to 24, **characterized in that** the viscosity of the adhesive is chosen as a function of the thickness of the strip and of the density of fibres of the porous material.

26. Electrochemical converter according to Claim 25, **characterized in that** the viscosity of the adhesive is between 0.3 and 50 Pa.s.

27. Electrochemical converter according to any one of Claims 22 to 26, **characterized in that** the adhesive is appropriate for impregnating the connection track in its thickness without decreasing the electron conduction.

28. Electrochemical converter according to Claim 22, **characterized in that** the thermoplastic adhesive film (16) closing the slits in gas-tight fashion is chosen from the family of the modified polyolefins, the polyesters, the polyamides and the polyetheramides.

29. Electrochemical converter according to Claim 22, **characterized in that** the width of the adhesive film is between 2 and 10 mm, preferably between 2 and 5 mm, its thickness being between 50 and 300 µm.

30. Process for producing flexible strips for connecting anodes and cathodes of an electrochemical converter, **characterized in that**:
- a porous substrate comprising a polymer base from Claims 2 to 5 is chosen,
- a stage of metallization of the substrate with a metal from Cu, Au, Sn, Ni, NiP and/or their alloys is carried out,
- the metallized strip is subjected to a hydrophobic treatment at a temperature below 80° by coating or spraying employing one or more thermoplastic elastomer polymers comprising vinyl functional groups which can be used in solution or in emulsion, of hydrophobic nature and having a permeability which is compatible with the passage of reactant gases through the layer formed, the said one or more polymers of hydrophobic nature coming within the category of the thermoplastic elastomers.

31. Process for producing strips for connecting anodes and cathodes of an electrochemical converter according to Claim 30, **characterized in that** the metallization stage comprises one or more surface preparations of the substrate of the strips, followed by stages in solution, including at least one chemical deposition on the insulating fibres with Cu or NiP and one or more galvanostatic depositions, the metallization stage being a stage derived from the autocatalytic group supplemented by continuous mechanical stirring and continued until a total thickness of the deposit around the polymer fibres of between 0.5 and 20 µm, preferably between 1 and 10 µm, is obtained.

32. Process for producing strips according to Claim 30 or 31, **characterized in that**, in order to subject the strip to the hydrophobic treatment, an operation of "sintering" the polymer is carried out.

33. Process for producing strips according to any one of Claims 30 to 32, **characterized in that**, in order to subject the strip to the hydrophobic treatment, dissolution is carried out, at least partially, in a solvent or a mixture of solvents so as to obtain a colloidal suspension or solution.

34. Process for producing strips according to any one of Claims 30 to 32, **characterized in that**, in order to subject the strip to the hydrophobic treatment, use is made of a formulation of latex type in aqueous suspension.

35. Process for producing strips according to Claim 34, **characterized in that** the dissolution is carried out by magnetic or mechanical stirring at a temperature of between ambient temperature and 80°C.

36. Process for producing strips according to any one of Claims 30 to 35, **characterized in that** the hydrophobic treatment is carried out by free coating.

37. Process for producing strips according to any one of Claims 30 to 36, **characterized in that**, after coating, the solvent or solvents is/are removed and an operation of sintering the polymer of the hydrophobic treatment is carried out in an oven at a temperature greater than the glass transition point of the hydrophobic polymer and slightly lower than its melting point.

38. Process for producing strips according to Claim 32 or 37, **characterized in that** the sintering temperature is less than 180°C.

39. Process for producing strips according to Claim 36, **characterized in that** the hydrophobic treatment by coating includes a porous conducting material having a porosity for which the distribution of the sizes is less than 1 µm.

40. Process for producing strips according to Claim 39, **characterized in that** the porous conducting material is chosen from nanopowders of carbon black type, carbon nanofibres or carbon nanotubes.

41. Process for producing strips according to Claim 40, **characterized in that** the porous conducting material is added to the dispersion of hydrophobic polymer in a polymer/carbon ratio of between 10/90 and 50/50, preferably between 20/80 and 30/70.
